# FASCICULE DE BREVET EUROPEEN

(11) **EP 1 393 593 B1**
(45) Date de publication et mention de la délivrance du brevet: **10.08.2005**
(21) Numéro de dépôt: 02735552.8
(22) Date de dépôt: 22.05.2002
(51) Int. Cl.: H05B 3/00, H05B 3/84, C03B 23/02

(54) **VITRE CHAUFFANTE**
BEHEIZBARES GLASELEMENT
HEATING PANE

(30) Priorité: 01.06.2001 DE 10126869
(43) Date de publication de la demande: 03.03.2004
(73) Titulaire: Saint-Gobain Glass France, 92400 Courbevoie (FR)
(72) Inventeur: GILLNER, Manfred, 52078 Aachen (DE); SCHMITZ, Jürgen, 52134 Herzogenrath (DE); DICKERS, Heinz-Erich, 50259 Pulheim (DE)
(74) Mandataire: Aupetit, Muriel J. C. (FR)
(86) Numéro de dépôt international: PCT/FR2002/001718
(87) Numéro de publication internationale: WO 2002/098176

(56) Documents cités:
- EP-A- 0 479 154
- EP-A- 0 524 537
- FR-A- 1 544 718
- US-A- 3 383 762

## Description

L'invention se rapporte à une vitre chauffante se composant d'au moins une vitre rigide, d'au moins deux barres collectrices de courant de polarité différente disposées de façon sensiblement parallèle à proximité d'une arête de la vitre chauffante à des distances différentes par rapport à l'arête et de résistances de chauffage linéaires électriquement raccordées à celles-ci.

Ces caractéristiques sont connues par le modèle d'utilité allemand DE 296 06 071 U1, qui concerne une vitre feuilletée à chauffage électrique, dans laquelle il est prévu des résistances de chauffage montées électriquement en parallèle noyées dans la couche intermédiaire thermoplastique dans la région de la position de repos des essuie-glaces. Egalement dans la couche intermédiaire thermoplastique sont noyées des bandes de film métallique agissant comme des barres collectrices raccordées à des lignes d'alimentation électrique, et qui sont électriquement reliées aux résistances de chauffage. Les barres collectrices sont disposées très à proximité l'une de l'autre et les résistances de chauffage sont posées en forme de boucles entre les barres collectrices. Dans un exemple de réalisation, les résistances de chauffage sont disposées en forme de boucles en U intercalées l'une dans l'autre en direction horizontale et brasées avec deux barres collectrices de courant en forme de rubans. Les barres collectrices de courant sont très proches et parallèles l'une à l'autre dans la région d'une arête latérale du pare-brise. La barre collectrice de courant éloignée de l'arête du pare-brise n'est qu'environ deux fois moins longue que la barre collectrice de courant disposée à proximité immédiate de l'arête latérale, cette barre collectrice de courant étant raccordée aux moitiés supérieures des boucles de fil, et l'autre barre collectrice de courant étant raccordée aux moitiés inférieures des boucles de fil.

Par la EP 0 479 154 A1, on connaît un pare-brise à chauffage électrique pourvu d'un chauffage à plat, avec deux barres collectrices de courant disposées aux arêtes supérieure et inférieure opposées de la vitre. La barre collectrice de courant inférieure est pourvue en son milieu d'une arrivée de courant orientée perpendiculairement à l'arête de la vitre, donc en forme de T. La barre collectrice de courant supérieure est raccordée à deux arrivées, qui sont posées le long des deux arêtes latérales. Les deux arrivées s'étendent en plus le long de l'arête inférieure de la vitre en dessous de la barre collectrice de courant inférieure. La première arrivée croise transversalement, sous isolation électrique, la branche perpendiculaire du T et est électriquement reliée à l'autre arrivée.
L'autre arrivée est également menée vers l'arête inférieure de la vitre. En raison de cette disposition, il ne faut que deux lignes de raccordement électrique au milieu de l'arête inférieure du pare-brise.

L'invention a pour objet de réaliser une autre vitre chauffante avec des barres collectrices de courant disposées à proximité d'une arête de la vitre.

Conformément à l'invention, cet objectif est atteint par le fait que les barres collectrices s'étendent latéralement aux résistances de chauffage et les résistances de chauffage sont, en partant d'une première barre collectrice de courant ramenées en passant au-dessus de l'autre barre collectrice de courant tout en étant isolées par rapport à celle-ci, en direction de la surface de la vitre et en au moins une boucle vers l'autre barre collectrice de courant et sont électriquement raccordées à celle-ci.
Les caractéristiques des revendications secondaires révèlent des perfectionnements avantageux de cet objet.

Conformément à l'invention, les résistances de chauffage s'étendent à partir d'une barre collectrice de courant éloignée de l'arête en direction de la face à chauffer et elles sont ramenées en arrière en une boucle vers une autre barre collectrice de courant proche de l'arête, en croisant la barre collectrice de courant éloignée de l'arête. Les barres collectrices de courant proche et éloignée de l'arête sont disposées dans la région de la même arête de la vitre. Pour éviter un court-circuit, la résistance de chauffage est électriquement isolée par rapport à la barre collectrice de courant dans la région du croisement. Les résistances de chauffage ainsi disposées forment un champ de chauffage, qui s'étend sur une zone déterminée de la vitre chauffante et qui est alimenté en énergie électrique par la paire de barres collectrices de courant.

L'invention n'est pas limitée au fait qu'il n'y ait qu'un seul champ chauffant sur la vitre chauffante. Il peut par exemple être intéressant de prévoir plusieurs champs chauffants, notamment pour réaliser des puissances de chauffage différentes dans des zones déterminées. On peut ainsi imaginer de disposer deux ou plus de deux champs chauffants les uns à côté des autres dans la face de la vitre. Les paires respectives de barres collectrices de courant par exemple pour deux champs chauffants peuvent se trouver à la même arête de la vitre, les arrivées de courant venant de l'arête supérieure pour un premier champ chauffant supérieur et venant de l'arête inférieure pour l'autre champ chauffant inférieur. Si les arrivées de courant doivent se faire à partir d'une seule arête de la vitre, il faut croiser de façon isolée plus d'une barre collectrice de courant. Dans une autre variante, on peut utiliser pour les deux champs chauffants une barre collectrice de courant comme borne de masse commune. Il est en outre possible de disposer les paires de barres collectrices pour différents champs chauffants à des arêtes latérales différentes. Les champs chauffants couvrent alors des zones de la vitre chauffante, qui sont disposées à distance les unes des autres, sont contiguës ou même sont intercalées les unes dans les autres.

Dans une autre variante de la vitre chauffante à chauffer, les résistances de chauffage forment plusieurs boucles, avant d'être ramenées à l'autre barre collectrice de courant. Les résistances de chauffage ne s'étendent donc pas uniquement de la barre collectrice éloignée de l'arête sur la largeur du champ chauffant et en retour à nouveau vers la barre collectrice proche de l'arête, mais elles sont ramenées en au moins une autre boucle à nouveau sur la largeur du champ chauffant vers la paire de barres collectrices. Le nombre de boucles de conducteur est donc toujours impair. Pour une résistance de chauffage prédéterminée, qui dépend de la longueur du conducteur, de la section transversale du conducteur et de la résistance spécifique de la matière utilisée, on peut régler la puissance de chauffage par unité de surface par le choix du nombre de boucles, indépendamment des dimensions géométriques de la surface à chauffer. L'utilisation d'un plus grand nombre de boucles présente l'avantage supplémentaire que le nombre des raccordements électriques, qui doivent en général être réalisés par brasage, est plus petit que pour la disposition des résistances de chauffage chaque fois en une seule boucle. On peut ainsi économiser des étapes de travail.

Les vitres chauffantes conformes à l'invention peuvent être des vitres monolithiques, dans lesquelles les résistances de chauffage sont disposées sur une de leurs faces principales. Un exemple connu pour ce type de vitre est fourni par les vitres d'automobiles ou de fenêtres en verre de sécurité trempé, qui sont pourvues de résistances de chauffage en une couleur conductrice. Usuellement, on imprime à cet effet sur la surface de la vitre, par sérigraphie, une pâte céramique avec une haute teneur en argent conducteur à la forme désirée des conducteurs de chauffage et des barres conductrices, et ensuite on la cuit. La barre conductrice éloignée de l'arête peut être isolée par rapport au conducteur qui la croise au moyen d'une couleur diélectrique. A cet effet, l'opération d'impression pour les résistances de chauffage et les barres collectrices doit être scindée en deux étapes. Dans une première étape, la barre collectrice de courant éloignée de l'arête est imprimée avec les résistances de chauffage, et la branche de retour de la boucle du conducteur de chauffage se termine peu avant la barre collectrice de courant éloignée de l'arête. Suit une seconde étape, dans laquelle une couche isolante, par exemple une couleur diélectrique à cuire, est déposée sur cette barre collectrice de courant. Ensuite, la barre collectrice de courant proche de l'arête est imprimée, et on pose en même temps des conducteurs de raccordement vers les extrémités ouvertes des boucles des conducteurs de chauffage. Les conducteurs de raccordement croisent de façon isolée la barre collectrice éloignée de l'arête et ferment le circuit électrique de chaque boucle de résistance de chauffage individuelle.

Une succession de couches conductrices et isolantes imprimées est connue par le brevet allemand DE 39 11 178 C2. Dans ce cas, on réalise un conducteur de sortie d'antenne sous forme de pseudo-conducteur coaxial avec un blindage puissant.

A côté des vitres chauffantes monolithiques, l'invention comprend aussi des vitres chauffantes en verre feuilleté, qui se composent d'au moins deux vitres rigides assemblées l'une à l'autre par collage au moyen d'une couche intermédiaire. Dans ce cas, les résistances de chauffage se composent de préférence de fils métalliques, qui sont noyés dans la couche intermédiaire. Il est toutefois également possible de fabriquer une vitre feuilletée chauffante conforme à l'invention en utilisant la vitre chauffante monolithique décrite pour former une des vitres individuelles. La surface avec les résistances de chauffage peut être disposée aussi bien à l'intérieur qu'à l'extérieur du verre feuilleté. Les vitres individuelles peuvent être constituées de verre ou de plastique. Les vitres feuilletées peuvent être composées de deux ou davantage de vitres de matières identiques ou différentes. Usuellement, on utilise comme couche intermédiaire assemblant l'une à l'autre les vitres individuelles un film thermoplastique adhésif, par exemple en polyvinyl butyral.

Les barres collectrices de courant dans des vitres feuilletées, qui peuvent être chauffées au moyen de résistances de chauffage noyées dans la couche intermédiaire, se composent usuellement de films métalliques plats en cuivre étamé. Il existe également des modèles, qui sont en outre pourvus d'un manteau isolant en polyimide. Avec une telle bande dé film métallique en guise de barre collectrice de courant éloignée de l'arête, une vitre feuilletée conforme à l'invention peut être aisément fabriquée en n'enlevant l'isolant qu'aux endroits où les résistances de chauffage doivent être raccordées électriquement à la barre collectrice de courant. La barre collectrice de courant proche de l'arête peut être placée sans manteau isolant ou, en cas d'utilisation d'une bande de film métallique isolé, l'isolant peut également être enlevé à ses endroits de raccordement avec les résistances de chauffage.

Pour garantir une vision aussi peu perturbée que possible à travers la vitre feuilletée, les fils de chauffage doivent présenter un diamètre relativement faible d'environ 20 µm à 100 µm. Des fils de chauffage en tungstène se sont avérés adéquats à cet effet. Toutefois, des fils de cuivre, qui peuvent être pourvus d'une couche de couleur sombre mate pour éviter les réflexions métalliques, conviennent également pour être utilisés dans la vitre feuilletée conforme à l'invention. On connaît aussi des fils à plusieurs couches, qui possèdent une âme mécaniquement résistante, qui est enveloppée par un métal bon conducteur et/ou facile à braser. Le choix de la matière des fils et/ou du diamètre des fils se fait en fonction des exigences mécaniques et électriques liées au champ chauffant désiré.

Lorsque les fils sont rectilignes et disposés en parallèle à faible distance l'un de l'autre, il peut se produire, dans des circonstances défavorables, des phénomènes de diffraction lors de l'incidence de la lumière. De tels phénomènes peuvent être évités par certaines irrégularités dans l'alignement des fils de chauffage, par exemple une forme ondulée des fils de chauffage.

Lorsque les barres collectrices de courant sont disposées uniquement à proximité d'une seule arête latérale, la vitre feuilletée convient par exemple pour une utilisation comme vitre feuilletée chauffante avec des arêtes libres, donc par exemple comme vitre latérale pouvant être ouverte pour une automobile. Les barres collectrices de courant peuvent être disposées à l'intérieur du puits de la portière et être masquées par la carrosserie ou des éléments d'étanchéité.

D'autres détails et avantages de l'objet de l'invention découleront, sans aucune intention de limitation, du dessin d'un exemple de réalisation et de sa description détaillée qui suit.

Dans les dessins, qui constituent une représentation simplifiée sans échelle particulière, la
- Fig. 1: montre une vitre feuilletée conforme à l'invention comme vitre latérale d'un véhicule à moteur, en élévation; et la
- Fig. 2: représente une coupe de la vitre latérale de la figure 1 le long de la ligne I-I.

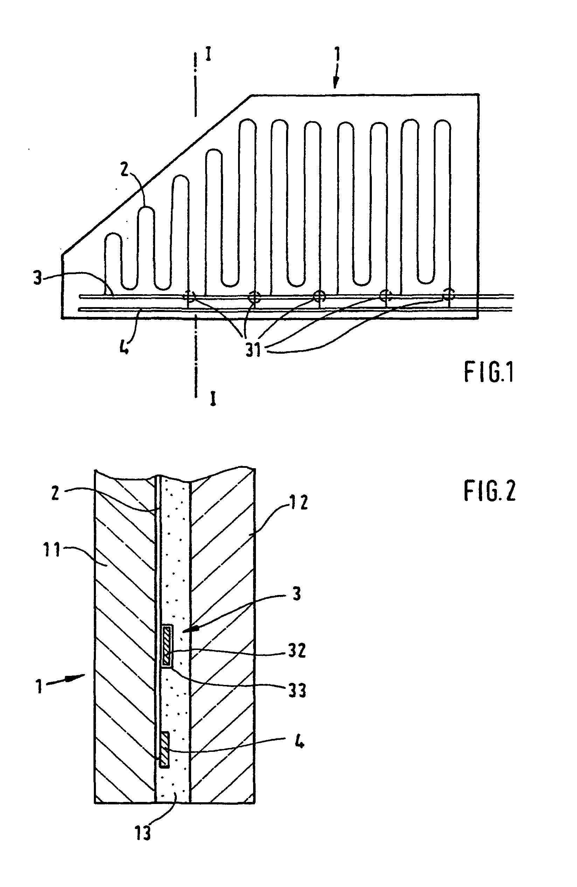

Suivant la figure 1, une vitre feuilletée 1 est pourvue de fils de chauffage 2 en cuivre laqué noir, qui sont disposés à l'intérieur de la vitre feuilletée 1 et dont le diamètre vaut environ 85 µm. Les fils de chauffage 2 s'étendent en forme de boucle entre l'arête inférieure de la vitre latérale 1 en position installée et son arête supérieure. Pour l'alimentation en énergie électrique, une première extrémité de chaque boucle est raccordée à une barre- collectrice de courant 3 et l'autre extrémité de la boucle est raccordée à la barre collectrice de courant 4. Sur le chemin vers la barre collectrice de courant 4, les fils de chauffage 2 doivent croiser la barre collectrice de courant 3 dans les zones 31. Dans ces zones 31, les fils de chauffage 2 sont électriquement isolés par rapport à la barre collectrice de courant 3. Les deux barres collectrices de courant 3 et 4 sont, comme les fils de chauffage 2, disposées à l'intérieur de la vitre feuilletée 1 et sont raccordées aux deux pôles d'un réseau électrique de bord. Entre les barres collectrices de courant se trouve donc usuellement une tension électrique de 12 V. Le courant fourni s'aligne sur la puissance de chauffage nécessaire par unité de surface, pour laquelle il faut tenir compte de la résistance électrique des fils de chauffage 2 ainsi que de leur distance mutuelle. Pour distribuer la puissance de chauffage de façon constante sur la face de la vitre feuilletée 1, les longueurs de fils des boucles individuelles doivent être aussi égales que possible, les autres propriétés des fils étant égales. Pour la vitre feuilletée représentée dans la figure 1, on a dès lors déposé le tronçon de fil, dans la région de l'arête inclinée, donc de moindre hauteur, en une boucle avec cinq changements de direction, tandis que les autres tronçons de fil ne changent chacun que trois fois de direction.

Les barres collectrices de courant 3 et 4 sont menées latéralement hors de la vitre feuilletée 1 et sont raccordées de façon connue au réseau de bord. Pour la vitre latérale de voiture représentée ici, la partie voisine de l'arête inférieure de la vitre, dans laquelle se trouvent les barres collectrices de courant, est disposée à l'intérieur du puits de la portière et est ainsi masquée par la carrosserie. Le masquage par ailleurs usuel des barres collectrices de courant à l'aide de couches de couleur opaques n'est dans ce cas pas nécessaire.

La figure 2 montre une représentation en coupe de la vitre latérale de la figure 1 le long de la ligne I-I. La vitre feuilletée 1 se compose de deux vitres individuelles 11 et 12 d'environ 2,1 mm d'épaisseur, qui sont de façon connue assemblées l'une à l'autre par collage avec interposition d'une couche intermédiaire thermoplastique 13 en polyvinyl butyral. Avant l'opération d'assemblage, les fils de chauffage 2 et les barres collectrices de courant 3 et 4 sont noyés dans la surface de la couche intermédiaire 13 à l'aide d'un procédé également connu.

La barre collectrice de courant 4 se compose d'un film de cuivre étamé et est mécaniquement et électriquement reliée au fil de chauffage 2 par brasage. Pour la barre collectrice de courant 3 au contraire, un film de cuivre étamé 32 est entouré de tous les côtés par un manteau isolant 33 en polyimide, le fil de chauffage 2 peut donc croiser la barre collectrice de courant 3, certes en la touchant mais néanmoins sans contact électrique avec celle-ci. Aux endroits où le fil de chauffage 2 est raccordé électriquement à la barre collectrice de courant 3, le manteau isolant doit être enlevé avant l'enrobage dans la couche intermédiaire thermoplastique.

## Revendications

1. Vitre chauffante se composant d'au moins une vitre rigide, d'au moins deux barres collectrices de courant de polarité différente disposées de façon parallèle à proximité d'une arête de la vitre chauffante à des distances différentes par rapport à l'arête et de résistances de chauffage linéaires électriquement raccordées à celles-ci, **caractérisée en ce que** les barres collectrices s'étendent latéralement aux résistances de chauffage et les résistances de chauffage (2) sont, en partant d'une première barre collectrice de courant (4) ramenées en passant au-dessus de l'autre barre collectrice de courant (3) tout en étant isolées par rapport à celle-ci, en direction de la surface de la vitre et en au moins une boucle vers l'autre barre collectrice de courant (3) et sont électriquement raccordées à celle-ci.

2. Vitre chauffante suivant la revendication 1, **caractérisée en ce que** les résistances de chauffage (2) sont ramenées vers l'autre barre collectrice de courant (3) après avoir formé plus d'une boucle et sont électriquement raccordées à celle-ci.

3. Vitre chauffante suivant la revendication 1 ou 2, **caractérisée en ce que** la vitre rigide est une vitre de verre et les résistances de chauffage (2) sont constituées par une couleur céramique conductrice cuite.

4. Vitre chauffante suivant la revendication 1 ou 2, **caractérisée en ce qu'**elle est constituée par une vitre feuilletée (1) composée d'au moins deux vitres rigides (11, 12) assemblées l'une à l'autre par collage au moyen d'une couche intermédiaire (13).

5. Vitre chauffante suivant la revendication 4, **caractérisée en ce que** les résistances de chauffage (2) sont noyées dans la couche intermédiaire (13) et **en ce que** les barres collectrices de courant (3, 4) sont des bandes de film métallique.

6. Vitre chauffante suivant la revendication 5, **caractérisée en ce qu'**au moins une bande de film métallique (3) est entourée d'une gaine isolante (33), qui n'est interrompue que dans la région du raccordement électrique avec une résistance de chauffage (2).

7. Vitre chauffante suivant l'une des revendications 5 ou 6, **caractérisée en ce que** les résistances de chauffage (2) sont constituées de fil de tungstène.

8. Vitre chauffante suivant l'une des revendications 5 ou 6, **caractérisée en ce que** les résistances de chauffage (2) sont constituées de fil de cuivre, en particulier de fil de cuivre laqué noir.

9. Vitre chauffante suivant l'une des revendications 5 ou 6, **caractérisée en ce que** les résistances de chauffage (2) se composent de plusieurs matériaux conducteurs, en particulier d'un premier métal mécaniquement résistant et d'un second métal ayant une conductibilité électrique plus élevée et une bonne aptitude au brasage.

10. Vitre chauffante suivant l'une quelconque des revendications 5 à 9, **caractérisée en ce que** les résistances de chauffage (2) sont noyées dans la couche intermédiaire (13) sous une forme ondulée.

11. Vitre chauffante suivant l'une quelconque des revendications 5 à 9, **caractérisée en ce que** les résistances de chauffage (2) sont noyées dans la couche intermédiaire (13) sous forme rectiligne, donc non ondulée.

12. Vitre chauffante suivant l'une quelconque des revendications 5 à 11, **caractérisée en ce qu'**au moins une des vitres (11, 12) est en verre.

13. Vitre chauffante suivant l'une quelconque des revendications 5 à 12, **caractérisée en ce que** la couche intermédiaire (13) est un polymère thermoplastique, en particulier du polyvinyl butyral.

14. Vitre chauffante suivant l'une quelconque des revendications précédentes, **caractérisée en ce que** la vitre chauffante (1) est une vitre latérale pouvant être ouverte d'automobile et **en ce que** les barres collectrices de courant (3, 4) sont disposées en position masquée.

## Patentansprüche

1. Heizscheibe bestehend aus mindestens einer starren Scheibe, mindestens zwei im wesentlichen parallel in der Nähe einer Kante der Heizscheibe mit unterschiedlichen Abständen zu der Kante angeordneten Stromsammelschienen unterschiedlicher Polarität und mit diesen elektrisch verbundenen linienförmigen Heizwiderständen, **dadurch gekennzeichnet, dass** sich die Stromsammelschienen seitlich zu den Heizwiderständen ausbreiten, und die Heizwiderstände (2) ausgehend von der einen Stromsammelschiene (4) über die andere Stromsammelschiene (3) gegenüber dieser elektrisch isoliert in Richtung der Scheibenfläche und in mindestens einer Schleife zu der anderen Stromsammelschiene (3) zurückgeführt und mit dieser elektrisch verbunden sind.

2. Heizscheibe nach Anspruch 1, **dadurch gekennzeichnet, dass** die Heizwiderstände (2) nach Bildung von mehr als einer Schleife zu der anderen Stromsammelschiene (3) zurückgeführt und mit dieser elektrisch verbunden sind.

3. Heizscheibe nach Anspruch 1 oder 2, **dadurch gekennzeichnet, dass** die starre Scheibe eine Glasscheibe ist und die Heizwiderstände (2) aus einer eingebrannten leitfähigen Keramikfarbe bestehen.

4. Heizscheibe nach Anspruch 1 oder 2, **dadurch gekennzeichnet, dass** sie als Verbundscheibe (1) aus mindestens zwei adhäsiv mittels einer Zwischenschicht (13) miteinander verbundenen starren Scheiben (11, 12) ausgebildet ist.

5. Heizscheibe nach Anspruch 4, **dadurch gekennzeichnet, dass** die Heizwiderstände (2) in der Zwischenschicht (13) eingebettet sind und die Stromsammelschienen (3, 4) Metallfolienbänder sind.

6. Heizscheibe nach Anspruch 5, **dadurch gekennzeichnet, dass** mindestens ein Metallfolienband (3) mit einer Isolationshülle (33) umgeben ist, welche nur im Bereich der elektrischen Verbindung mit einem Heizwiderstand (2) unterbrochen ist.

7. Heizscheibe nach einem der Ansprüche 5 oder 6, **dadurch gekennzeichnet, dass** die Heizwiderstände (2) aus Wolframdraht bestehen.

8. Heizscheibe nach einem der Ansprüche 5 oder 6, **dadurch gekennzeichnet, dass** die Heizwiderstände (2) aus Kupferdraht, insbesondere schwarz lackiertem Kupferdraht bestehen.

9. Heizscheibe nach einem der Ansprüche 5 oder 6, **dadurch gekennzeichnet, dass** die Heizwiderstände (2) aus mehreren leitfähigen Materialien bestehen, insbesondere einem ersten mechanisch beanspruchbaren Metall und einem zweiten Metall höherer elektrischer Leitfähigkeit und guter Lötbarkeit.

10. Heizscheibe nach einem der Ansprüche 5 bis 9, **dadurch gekennzeichnet, dass** die Heizwiderstände (2) in gewellter Form in der Zwischenschicht (13) eingebettet sind.

11. Heizscheibe nach einem der Ansprüche 5 bis 9, **dadurch gekennzeichnet, dass** die Heizwiderstände (2) in gerader, also ungewellter Form in der Zwischenschicht (13) eingebettet sind.

12. Heizscheibe nach einem der Ansprüche 5 bis 11, **dadurch gekennzeichnet, dass** mindestens eine der Scheiben (11, 12) aus Glas besteht.

13. Heizscheibe nach einem der Ansprüche 5 bis 12, **dadurch gekennzeichnet, dass** die Zwischenschicht (13) ein thermoplastisches Polymer, insbesondere Polyvinylbutyral ist.

14. Heizscheibe nach einem der vorhergehenden Ansprüche, **dadurch gekennzeichnet, dass** die Heizscheibe (1) eine Automobilseitenscheibe ist, die geöffnet werden kann, und die Stromsammelschienen (3, 4) verdeckt angeordnet sind.

## Claims

1. A heated window consisting of at least one rigid pane, at least two current busbars of different polarity placed parallel close to one edge of the heated window at different distances from the edge, and linear heating resistors electrically connected thereto, **characterized in that** the busbars lie sideways to the heating resistors and the heating resistors (2), start from a first current busbar (4), and, passing over the other current busbar (3) while being insulated therefrom, in the direction of the window surface and in at least one loop, return toward the other current busbar (3) and are electrically connected thereto.

2. The heated window as claimed in claim 1, **characterized in that** the heating resistors (2) return toward the other current busbar (3) after having formed more than one loop and are electrically connected thereto.

3. The heated window as claimed in claim 1 or 2, **characterized in that** the rigid pane is a glass pane and the heating resistors (2) consist of a baked conducting ceramic matrix.

4. The heated window as claimed in claim 1 or 2, **characterized in that** it consists of a laminated window (1) formed from at least two rigid panes (11, 12) assembled to each other by adhesive bonding by means of an intermediate layer (13).

5. The heated window as claimed in claim 4, **characterized in that** the heating resistors (2) are embedded in the intermediate layer (13) and **in that** the current busbars (3, 4) are strips of metal film.

6. The heated window as claimed in claim 5, **characterized in that** at least one metal film strip (3) is surrounded with an insulating sheath (33), which is only broken in the region of the electrical connection with a heating resistor (2).

7. The heated window as claimed in either of claims 5 and 6, **characterized in that** the heating resistors (2) consist of tungsten wire.

8. The heated window as claimed in either of claims 5 and 6, **characterized in that** the heating resistors (2) consist of copper wire, in particular of black-lacquered copper wire.

9. The heated window as claimed in either of claims 5 and 6, **characterized in that** the heating resistors (2) are composed of several conducting materials, in particular of a first mechanically strong metal and a second metal having a higher electrical conductivity and good brazability.

10. The heated window as claimed in any one of claims 5 to 9, **characterized in that** the heating resistors (2) are embedded in the intermediate layer (13) in a wavy arrangement.

11. The heated window as claimed in any one of claims 5 to 9, **characterized in that** the heating resistors (2) are embedded in the intermediate layer (13) in a straight, and therefore not wavy, arrangement.

12. The heated window as claimed in any one of claims 5 to 11, **characterized in that** at least one of the panes (11, 12) is made of glass.

13. The heated window as claimed in any one of claims 5 to 12, **characterized in that** the intermediate layer (13) is a thermoplastic polymer, in particular polyvinyl butyral.

14. The heated window as claimed in any one of the preceding claims, **characterized in that** the heated window (1) is a motor vehicle side window which can be opened and **in that** the current busbars (3, 4) are arranged in a masked position.
